# EUROPÄISCHE PATENTANMELDUNG

(11) **EP 4 539 311 A2**
(43) Veröffentlichungstag der Anmeldung: **16.04.2025**
(21) Anmeldenummer: 25161372.5
(22) Anmeldetag: 21.07.2020
(51) Int. Cl.: H02K 15/04

(54) **VERFAHREN ZUR HERSTELLUNG EINER BASISWICKLUNGSBAUGRUPPE UND EINES STATORS FÜR EINE ELEKTRISCHE MASCHINE**

(30) Priorität: 22.07.2019 DE 102019119745
(62) Teilanmeldung aus: 20745133.7
(71) Anmelder: Additive | Drives GmbH, 01189 Dresden (DE)
(72) Erfinder: Helm, Axel, 01129 Dresden (DE)
(74) Vertreter: Pfrang, Tilman

(57) **Zusammenfassung**

Verfahren zur Herstellung eines Stators für eine elektrische Maschine aufweisend die folgenden Schritte: Herstellen einer Statorbasisbaugruppe durch Zusammenfügen einer Basiswicklungsbaugruppe (10) und eines Statorkerns (20) mit einer Vielzahl von Polkernen (21), wobei die Basiswicklungsbaugruppe (10) eine Vielzahl von Leiterschleifengruppen (11) aufweist, die jeweils aus einer Vielzahl von einseitig offenen Leiterschleifen (12) gebildet sind, wobei die geschlossenen Enden (13) der einseitig offenen Leiterschleifen (12) an einer Stirnseite der Basiswicklungsbaugruppe (10) angeordnet sind und die offenen Enden (14) an der gegenüberliegenden Stirnseite der Basiswicklungsbaugruppe (10) angeordnet sind, wobei das Zusammenfügen der Basiswicklungsbaugruppe und des Statorkerns (20) derart erfolgt, dass in jeder Leiterschleifengruppe (11) mindestens ein Polkern (21) angeordnet ist; und Ausbilden eines Wickelkopfes (30) auf der Stirnseite der Statorbasisbaugruppe mit den offenen Enden (14) der einseitig offenen Leiterschleifen (12), wobei das Ausbilden des Wickelkopfes (30) mittels eines additiven Fertigungsverfahrens erfolgt.

## Beschreibung

Die Erfindung betrifft ein Verfahren zur Herstellung einer Basiswicklungsgruppe eines Stators für eine elektrische Maschine gemäß dem Gegenstand von Anspruch 1, ein Verfahren zur Herstellung eines Stators für eine elektrische Maschine gemäß dem Gegenstand von Anspruch 7, sowie eine Basiswicklungsbaugruppe eines Stators gemäß dem Gegenstand von Anspruch 20 und einen Stator gemäß dem Gegenstand von Anspruch 21.

Bei der Fertigung von elektrischen Maschinen entfällt ein großer Teil der Fertigungszeit und der Fertigungskosten auf die Herstellung des Stators. Komplexe verteilte Wicklungen sowie die Entwicklung hin zu kompakteren Strukturen erfordern immer präzisere Wicklungen sowie eine genaue Einhaltung geometrischer Vorgaben, um den stetig wachsenden Anforderungen hinsichtlich der Effizienz und präzisen Ansteuerbarkeit von elektrischen Maschinen gerecht zu werden.

Zur Erreichung hoher Füllfaktoren werden Statorwicklungen aus isolierten Leitern gewickelt. Die Verbindungsleitungen, die an den Enden der Wicklungen einen Wickelkopf ausbilden, benötigen hierbei sehr viel Bauraum, da bei hohen Windungszahlen viele Einzelleiter vorgesehen werden müssen und der Biegeradius der Einzelleiter beachtet werden muss, um einen Bruch der Verbindungsleitungen im Wickelkopf zu verhindern.

Es wurde im Lichte dessen vorgeschlagen, Teile des Stators oder den gesamten Stator mittels eines additiven Fertigungsverfahrens herzustellen, bei dem die entsprechenden Teile des Stators durch schichtweises Aufbringen und örtlich selektives Verfestigen eines Aufbaumaterials gefertigt werden.

So beschreibt beispielsweise die US 2015/0076951 A1 ein Herstellungsverfahren für eine elektrische Maschine, bei der gesamte Stator mittels eines additiven Fertigungsverfahrens hergestellt wird. Dies erfordert die Bereitstellung mehrerer additiver Herstellungsvorrichtungen für die verschiedenen im Stator verwendeten Materialien und führt insgesamt zu einem teuren und aufwändigen Herstellungsverfahren.

Die DE 10 2015 211 552 A1 schlägt ein Verfahren zum Herstellen eines Wicklungsabschnitts einer elektrischen Maschine vor, bei dem die Wicklungen einer elektrischen Maschine in Form einer Vielzahl von Wicklungsabschnitten anhand eines CAD-Modells gefertigt werden. Die einzelnen Wicklungsabschnitte werden mit Kontaktierungselementen ausgebildet, über die die Wicklungsabschnitte mechanisch miteinander verbunden werden. Dies erfordert die separate Fertigung mehrerer Bauteile, was mit entsprechendem Zeit- und Kostenaufwand verbunden ist. Zudem ist die mechanische Verbindung der Wicklungsabschnitte fehleranfällig.

Vor diesem Hintergrund ist es Aufgabe der vorliegenden Erfindung, einen Stator anzugeben, dessen Wickelkopf möglichst wenig Bauraum beansprucht, und der mit einer hohen Fertigungsgenauigkeit effizient und kostengünstig herstellbar ist.

Diese Aufgabe wird durch ein Verfahren zur Herstellung einer Basiswicklungsgruppe eines Stators für eine elektrische Maschine gemäß Anspruch 1, ein Verfahren zur Herstellung eines Stators für eine elektrische Maschine gemäß Anspruch 7, eine Basiswicklungsbaugruppe eines Stators gemäß Anspruch 20 und einen Stator gemäß Anspruch 21 gelöst.

Insbesondere wird die Aufgabe gelöst durch ein Verfahren zur Fertigung einer Basiswicklungsbaugruppe eines Stators für eine elektrische Maschine mit einer Vielzahl von Leiterschleifengruppen, die jeweils aus einer Vielzahl von einseitig offenen Leiterschleifen gebildet sind, wobei die geschlossenen Enden der einseitig offenen Leiterschleifen an einer Stirnseite der Basisbaugruppe anordenbar sind und die offenen Enden an der gegenüberliegenden Stirnseite der Basisbaugruppe anordenbar sind, wobei das Fertigen der Basiswicklungsbaugruppe mittels eines additiven Fertigungsverfahrens erfolgt, bei dem ein schichtweises Aufbringen und örtliches Verfestigen von Aufbaumaterial erfolgt.

Nach einem ersten Aspekt der vorliegenden Erfindung wird für die Fertigung der Basiswicklungsbaugruppe, die mit einem Statorkern und einem Wickelkopf zu einem Stator vervollständigt werden kann, ein additives Fertigungsverfahren eingesetzt, da so auch komplexe Wicklungsgeometrien mit hoher Präzision gefertigt werden können.

Die Herstellung der Basiswicklungsbaugruppe erfolgt erfindungsgemäß dabei dergestalt, dass die Basiswicklungsbaugruppe aus einseitig offenen Leiterschleifen besteht, wobei die geschlossenen Enden aller Leiterschleifen an einer gemeinsamen Seite der Basiswicklungsbaugruppe angeordnet sind, die dazu vorgesehen ist, eine erste Stirnseite einer Statorbasisbaugruppe aus der Basiswicklungsbaugruppe und einem Statorkern zu bilden, die später zu einer Stirnseite des Stators wird. An diesem Ende sind alle Leiterschleifen geschlossen und bilden einen Wickelkopf. Es ist nicht notwendig, für dieses Ende der Basiswicklungsbaugruppe einen Wickelkopf nach Fertigstellung der Basiswicklungsbaugruppe herzustellen.

Die offenen Enden aller Leiterschleifen sind an einer gegenüberliegenden Seite angeordnet, die dazu vorgesehen ist, die zweite Stirnseite des Stators zu bilden. Durch diese Anordnung der offenen Enden wird eine Basiswicklungsbaugruppe geschaffen, in die zu einem späteren Zeitpunkt auf einfache Weise ein Statorkern einbringbar ist, wodurch die Basiswicklungsbaugruppe zu einer effizienteren Herstellung eines Stators beitragen kann.

Da die Basiswicklungsbaugruppe gemäß einem ersten Aspekt der vorliegenden Erfindung mittels eines additiven Fertigungsverfahrens hergestellt wird, können auch komplexe Wicklungsgeometrien präzise und schnell gefertigt werden.

Das additive Fertigungsverfahren im Sinne der vorliegenden Erfindung ist allgemein dadurch charakterisiert, dass dreidimensionale Objekte bzw. Bauteile durch selektives Verfestigen eines formlosen Aufbaumaterials Schicht für Schicht hergestellt werden. Die Verfestigung kann durch Zufuhr von Wärmeenergie zum Aufbaumaterial, durch Bestrahlung desselben mit elektromagnetischer Strahlung oder Teilchenstrahlung, zum Beispiel beim Lasersintern ("SLS" oder "DMLS"), Laserschmelzen oder Elektronenstrahlschmelzen, herbeigeführt werden. Beim Lasersintern oder Laserschmelzen wird der Einwirkbereich ein Laserstrahls (Laserfleck) auf eine Schicht des Aufbaumaterials über jene Stellen der Schicht bewegt, die dem Bauteilquerschnitt des herzustellenden Bauteils in dieser Schicht entsprechen. Dabei wird wiederholt eine dünne Schicht eines pulverförmigen Aufbaumaterials aufgebracht und das Aufbaumaterial in jeder Schicht durch selektives Bestrahlen mit mindestens einer Strahlungsquelle örtlich selektiv verfestigt und vor dem nächsten Auftragungsschritt die Bearbeitungsebene verändert wird.

Dementsprechend wird die Basiswicklungsbaugruppe gemäß einem ersten Aspekt der vorliegenden Erfindung gefertigt, indem ein formloses Aufbaumaterial zur Ausbildung der Basiswicklungsgruppe schichtweise entsprechend der zu fertigenden Objektgeometrie aufgetragen wird, das aufgetragene Aufbaumaterial mittels Einbringung von Strahlungsenergie verfestigt wird und vor dem nächsten Auftragungsschritt die Bearbeitungsebene verändert wird, so dass die zuvor verfestigte Schicht als Basis für die nächste Schicht des formlosen Aufbaumaterials dient.

Die additive Fertigung der Basiswicklungsbaugruppe beginnt vorzugsweise mit den geschlossenen Enden der offenen Leiterschleifen. Diese werden dann bis zum Erreichen der offenen Enden schichtweise aufgebaut.

Durch das beschriebene Verfahren zur Herstellung der Basiswicklungsbaugruppe kann eine einteilige Fertigung der Basiswicklungsbaugruppe realisiert werden, was zahlreiche Vorteile mit sich bringt. Durch die einstückige Herstellung können keine Übergangswiderstände auftreten, wie sie bei Steckverbindungen von zusammengesteckten Basiswicklungsbaugruppen auftreten. Weiterhin wird der Herstellungsprozess vereinfacht und weniger fehleranfällig, da keine Gefahr von Leitungsunterbrechungen besteht, wie sie bei Steckverbindungen auftreten können. Zudem ermöglicht es die additive Fertigung, die Abstände zwischen den einzelnen Wicklungen zu verringern, da kein Platz für Steckverbindungen vorgesehen werden muss.

Als Aufbaumaterial für die Basiswicklungsbaugruppe wird ein Material eingesetzt, das nach dem Verfestigen elektrisch leitend ist. Das vorzugsweise pulverförmige Aufbaumaterial umfasst bevorzugt mindestens ein Metall. Vorzugswiese besteht das Aufbaumaterial zu mindestens 10 Gew.-%, weiter vorzugsweise 50 Gew.-%, noch weiter vorzugsweise mindestens 80 Gew.-%, noch weiter vorzugsweise mindestens 99 Gew.-%, noch weiter vorzugsweise mindestens 99,99 Gew.-% aus einem oder mehreren leitfähigen Metall/en.

In einer vorteilhaften Weiterbildung der Erfindung werden bei der Fertigung der Basiswicklungsgruppe Verbindungsstrukturen auf den offenen Enden der einseitig offenen Leiterschleifen ausgebildet, die die Leiterschleifen innerhalb einer Leiterschleifengruppe und/oder die Leiterschleifengruppen miteinander starr verbinden. Dadurch wird die mechanische Stabilität der Basiswicklungsbaugruppe erhöht, was zu einer weiter verbesserten Fertigungsgenauigkeit des Stators insgesamt beiträgt, da zum einen eine hohe Positionsgenauigkeit der Leiterschleifen untereinander erreicht und während des Fertigungsvorgangs aufrecht erhalten werden kann, und zum anderen einer Verschiebung der einseitig offenen Leiterschleifen während des Fertigungsvorgangs vorgebeugt werden kann, insbesondere bei einer später erfolgenden Einbringung eines Statorkerns in die Basiswicklungsgruppe, die zu diesem Zeitpunkt bereits von der Bauplatte getrennt sein kann.

Die Verbindungsstrukturen sind in einer vorzugsweisen Ausführungsform derart ausgebildet, dass sie die durch die offenen Enden der Leiterschleifen gebildeten Flächen an der Stirnseite des Stators nicht überragen, so dass die Verbindungsstrukturen nicht die Einbringung eines Statorkerns behindern. Die Verbindungsstrukturen werden vorzugsweise mit der Basiswicklungsbaugruppe mittels des additiven Fertigungsverfahrens gebildet.

In einer alternativen bevorzugten Ausführungsform werden die Verbindungsstrukturen derart ausgebildet, dass sie Distanzhalter beinhalten, die dazu ausgebildet sind, eine Führung für das Aufschieben eines Statorkerns bereitzustellen. Dies trägt zu einer weiteren Verbesserung der Effizienz bei der Fertigung eines Stators mit der erfindungsgemäßen Basiswicklungsbaugruppe bei, da Fehlern beim Einbringen eines Statorkerns in die Basiswicklungsbaugruppe vorgebeugt werden kann. Die Distanzhalter sind vorzugsweise durch Elemente der Verbindungsstrukturen gebildet, die über die durch die offenen Enden der Leiterschleifen gebildeten Flächen an der Stirnseite des Stators hinaus vorstehen, so dass durch die Distanzhalter ein vorgegebener Abstand zwischen den Leiterschleifengruppen und einem einzubringenden Statorkern eingehalten kann.

In einer vorteilhaften Weiterbildung der Erfindung weisen die einseitig offenen Leiterschleifen Merkmale zur Fixierung einer Isolatorplatte und/oder zur Führung eines Statorkerns auf. Zur Fixierung einer Isolatorplatte, die auf die offenen Enden der Leiterschleifen der Basiswicklungsgruppe aufbringbar ist, können beispielsweise Vorsprünge auf den Innenseiten der geschlossenen Enden der offenen Leiterschleifen ausgebildet werden, die in Eingriff mit entsprechenden Ausnehmungen der Isolatorplatte bringbar sind, wenn die Isolatorplatte auf die offenen Enden der Basiswicklungsgruppe aufgesteckt wird.

Zur Führung eines Statorkerns können zusätzlich oder alternativ zu den Distanzhaltern, die auf den offenen Enden der Leiterschleifen ausgebildet sind, Vorsprünge an mindestens einer der Leiterschleifen ausgebildet werden. Derartige Vorsprünge dienen als Merkmale zur Führung eines Statorkerns, wenn ein Statorkern in die offenen Enden der Leiterschleifengruppen eingebracht wird, da die Vorsprünge den Statorkern auf Distanz zu den Leiterschleifen halten. Die Vorsprünge können in diesem Fall mit Sollbruchstellen versehen sein, um sie zu einem späteren Zeitpunkt einfach entfernen zu können. Die Vorsprünge können an den Leiterschleifen auf der der Innenseite der Leiterschleife hin gewandten Seite angeordnet sein, um einen Abstand zwischen den Polkernen des Stators und der Innenseite der Leiterschleifen sicherzustellen, oder an einer Außenseite der Basiswicklungsbaugruppe, um den äußeren Umfang des Statorkerns zu fixieren.

Die Merkmale zur Fixierung der Isolatorplatte und/oder zur Führung eines Statorkerns können mit den übrigen Elementen der Basiswicklungsbaugruppe während des additiven Fertigungsverfahrens gefertigt werden. Dadurch kann ohne erheblichen zusätzlichen Aufwand die Fertigungsgenauigkeit und Fertigungsgeschwindigkeit des Stators in einfacher Weise verbessert werden, da die Notwendigkeit einer zusätzlichen Halterung während des Zusammenbaus von Basisgruppe und Statorkern entfällt.

In einer vorteilhaften Weiterbildung der Erfindung erfolgt das Fertigen der Basiswicklungsbaugruppe derart, dass die einseitig offenen Leiterschleifen eine strukturierte, rauhe Oberfläche aufweisen. Vorzugsweise weisen die Oberflächen der einseitig offenen Leiterschleifen einen Mittenrauwert Ra (vorzugsweise nach ISO 1302:2002 bestimmt) von 5 µm oder mehr auf. Die Oberflächenrauheit kann bei der additiven Fertigung gezielt erzeugt werden oder durch entsprechende Nachbearbeitung erhöht werden, um die Hafteigenschaften der offenen Leiterschleifen für ein isolierendes Medium, beispielsweise ein Harz, mit dem die Zwischenräume zwischen den offenen Leiterschleifen ausgegossen werden können, zu verbessern.

Es ist weiter bevorzugt, dass die Basiswicklungsbaugruppe auf einer Bauplatte gefertigt wird, derart, dass die geschlossenen Enden der einseitig offenen Leiterschleifen auf der Bauplatte angeordnet sind. Dadurch wird die mechanische Stabilität der Basiswicklungsbaugruppe während der Fertigung verbessert und ein definierter Abstand der Wicklungen zueinander sichergestellt.

Die vorstehend genannte Aufgabe wird nach einem zweiten Aspekt der Erfindung gelöst durch ein Verfahren zur Herstellung eines Stators für eine elektrische Maschine, aufweisend die folgenden Schritte:
- Herstellen einer Statorbasisbaugruppe durch Zusammenfügen einer Basiswicklungsbaugruppe und eines Statorkerns mit einer Vielzahl von Polkernen,
   wobei die Basiswicklungsbaugruppe eine Vielzahl von Leiterschleifengruppen aufweist, die jeweils aus einer Vielzahl von einseitig offenen Leiterschleifen gebildet sind, wobei die geschlossenen Enden der einseitig offenen Leiterschleifen an einer Stirnseite der Basiswicklungsbaugruppe angeordnet sind und die offenen Enden an der gegenüberliegenden Stirnseite der Basiswicklungsbaugruppe angeordnet sind,
   wobei das Zusammenfügen der Basiswicklungsbaugruppe und des Statorkerns derart erfolgt, dass in jeder Leiterschleifengruppe mindestens ein Polkern angeordnet ist; und
- Ausbilden eines Wickelkopfes auf der Stirnseite der Statorbasisbaugruppe mit den offenen Enden der einseitig offenen Leiterschleifen.

Gemäß dem obenstehenden Verfahren erfolgt die Fertigung des Stators in einem zweistufigen Prozess. Zunächst wird eine Statorbasisbaugruppe hergestellt, indem eine Basiswicklungsbaugruppe und ein Statorkern mit einer Vielzahl von Polkernen zusammengefügt wird. Die Basiswicklungsbaugruppe ist hierbei durch eine Vielzahl von einseitig offenen Leiterschleifen gebildet, wobei die geschlossenen Enden der einseitig offenen Leiterschleifen an einer Stirnseite der Basiswicklungsbaugruppe angeordnet sind und die offenen Enden an der anderen Stirnseite der Basiswicklungsbaugruppe. Das Zusammenführen der Basiswicklungsbaugruppe mit dem Stator erfolgt so, dass die Polkerne des Statorkerns in den einseitig offenen Leiterschleifen angeordnet werden.

Die so gebildete Statorbasisbaugruppe kann dann zu einem Stator vervollständigt werden, indem auf der Stirnseite der Statorbasisbaugruppe mit den einseitig offenen Enden der Leiterschleifen ein Wickelkopf ausgebildet wird, der die einseitig offenen Leiterschleifen zu Wicklungen des Stators verbindet.

Wie bereits im Zusammenhang mit der obenstehend beschriebenen Basiswicklungsbaugruppe erwähnt, wird gemäß einem ersten Aspekt der vorliegenden Erfindung für die Fertigung der Basiswicklungsbaugruppe ein additives Fertigungsverfahren eingesetzt, da somit auch komplexe Wicklungsgeometrien mit hoher Präzision gefertigt werden können. Wenn im Rahmen des Verfahrens zur Herstellung eines Stators die Basiswicklungsbaugruppe gemäß dem ersten Aspekt der Erfindung mittels eines additiven Herstellungsverfahrens hergestellt wird, wird die Basiswicklungsbaugruppe so gefertigt, dass die geschlossenen Enden der einseitig offenen Leiterschleifen auf einer Seite der Basiswicklungsbaugruppe angeordnet sind, die nach Abschluss des Herstellungsverfahrens eine erste Stirnseite des Stators bildet. An dieser ersten Stirnseite des Stators sind alle Leiterschleifen der Basiswicklungsbaugruppe bereits geschlossen, so dass die Wicklungen an dieser Stirnseite nicht in einem späteren Arbeitsgang geschlossen werden müssen. Weiter erfolgt die Fertigung der Basiswicklungsbaugruppe so, dass die offenen Enden der einseitig offenen Leiterschleifen an einer Seite des Stators angeordnet sind, die nach Abschluss des Herstellungsverfahrens die zweite Stirnseite des Stators bildet.

Mit dieser Konfiguration der Basiswicklungsbaugruppe ist es möglich, in einem zweiten Herstellungsschritt die Basiswicklungsbaugruppe und den Statorkern zu der Statorbasisbaugruppe zusammenzufügen, indem der Statorkern durch die offenen Enden der Leiterschleifen(gruppen) in die Basiswicklungsbaugruppe eingebracht wird. Die Einbringung kann mittels eines einfachen Einsteckens der Polkerne des Statorkerns in die offenen Enden der einseitig offenen Leiterschleifen erfolgen. Die Einbringung des Statorkerns ist damit äußerst einfach und schnell durchzuführen. Die Anordnung der Polkerne am Statorkern entspricht der Anordnung der Lücken zwischen den offenen Enden der Leiterschleifen in der Basiswicklungsbaugruppe, so dass es beim Aufstecken der Statorkerns auf die Basiswicklungsbaugruppe nicht zu einer Fehlausrichtung der Basiswicklungsbaugruppe gegenüber dem Statorkern kommen kann.

Die Fertigung des geometrisch und strukturell weniger komplexen Statorkerns kann unabhängig hiervon erfolgen, um die Effizienz des Herstellungsprozesses zu verbessern.

Es ist jedoch auch möglich, zur Senkung der Herstellungskosten für die Fertigung der Statorbasisbaugruppe konventionell hergestellte einseitig offene Leiterschleifen einzusetzen, indem beispielsweise die einseitig offenen Leiterschleifen mittels eines Stanzbiegeverfahrens gefertigt werden und auf einen Statorkern mit einer Vielzahl von Polkernen aufgesteckt werden, derart, dass die Leiterschleifen in die zwischen den Polkernen des Statorkerns vorhandenen Nuten eingeschoben werden. Entscheidend ist lediglich, dass die Statorbasisbaugruppe derart ausgebildet wird, dass die offenen Enden der Leiterschleifen der Basiswicklungsbaugruppe so angeordnet sind, dass nach dem Zusammenfügen von Basiswicklungsbaugruppe und Statorkern der Wickelkopf auf den offenen Enden der Leiterschleifen der Basiswicklungsbaugruppe ausgebildet werden kann.

Unter dem Einbringen des Statorkerns in die offenen Leiterschleifen der Basiswicklungsbaugruppe soll im Rahmen der vorliegenden Erfindung entweder verstanden werden, dass der Statorkern in die offenen Enden der Leiterschleifen der Leiterschleifengruppen eingebracht wird, oder dass die Leiterschleifen in die zwischen den Polkernen des Statorkerns vorhandenen Nuten eingeschoben werden. Wesentlich ist nur, dass nach dem Schritt des Einbringens die Polkerne in den Leiterschleifen angeordnet sind. Dies kann auch dadurch erreicht werden, dass die Leiterschleifen nicht vorab zu einer Basiswicklungsbaugruppe zusammengesetzt werden, sondern die Leiterschleifen direkt auf die Polkerne des Statorkerns aufgesteckt werden und die Basiswicklungsbaugruppe somit während des Aufsteckens der Leiterschleifen auf den Statorkern gebildet wird. Für das erfindungsgemäße Herstellungsverfahren ist nur entscheidend, dass nach dem Zusammenfügen eine Statorbasisbaugruppe erhalten wird, bei der die offenen Enden der einseitig offenen Leiterschleifen an einer Stirnseite der Statorbasisbaugruppe angeordnet sind, damit auf dieser Stirnseite der Wickelkopf des Stators ausgebildet werden kann.

Es ist möglich, dass einige der einseitig offenen Leiterschleifen so ausgebildet sind, dass sie sich über mehrere benachbarte Leiterschleifengruppen erstrecken. Damit ist es möglich, eine verteilte Wicklung herzustellen, bei der einige der einseitig offenen Leiterschleifen mehr als einen Pol einschließen. Entscheidend ist lediglich, dass die offenen Enden der einseitig offenen Leiterschleifen in der Basiswicklungsbaugruppe so angeordnet sind, dass ein Einbringen von Bauelementen in die Basiswicklungsbaugruppe über die offenen Enden der einseitig offenen Leiterschleifen möglich ist.

Es ist bevorzugt, dass der Wickelkopf mittels eines additiven Fertigungsverfahrens hergestellt wird, das eine präzise Fertigung des Wickelkopfes erlaubt. In diesem Fall wird der Wickelkopf gefertigt, indem ein formloses Aufbaumaterial zur Ausbildung des Wickelkopfes schichtweise entsprechend der zu fertigenden Objektgeometrie des Wickelkopfes auf die offenen Enden der Leiterschleifen der Basiswicklungsbaugruppe aufgetragen wird, das aufgetragene Aufbaumaterial mittels Einbringung von Strahlungsenergie selektiv verfestigt wird und vor dem nächsten Auftragungsschritt die Bearbeitungsebene verändert wird, so dass die zuvor verfestigte Schicht als Basis für die nächste Schicht des formlosen Aufbaumaterials dient. Bevorzugt wird der Wickelkopf auf einer leitenden Verbindung auf einem isolierenden Substrat aufgebaut, wie untenstehend noch im Detail erläutert wird.

Als Aufbaumaterial für den Wickelkopf wird wiederum ein Aufbaumaterial eingesetzt, das nach dem Verfestigen elektrisch leitend ist. Das vorzugsweise pulverförmige Aufbaumaterial umfasst bevorzugt mindestens ein Metall. Vorzugswiese besteht das Aufbaumaterial zu mindestens 10 Gew.-%, weiter vorzugsweise 50 Gew.-%, noch weiter vorzugsweise mindestens 80 Gew.-%, noch weiter vorzugsweise mindestens 99 Gew.-%, noch weiter vorzugsweise mindestens 99,99 Gew.-%, aus einem oder mehreren leitfähigen Metall/en.

Insgesamt wird mit dem erfindungsgemäßen Herstellungsverfahren eines Stators eine effiziente und kostengünstige Möglichkeit zur Herstellung eines Stators mit geringem Bauraum und hoher Fertigungspräzision geschaffen, indem ein hybrider Fertigungsprozess aus additivem Fertigungsverfahren und herkömmlichen mechanischen Fertigungsschritten ermöglicht wird. Das additive Fertigungsverfahren kann gezielt für die Fertigung von Komponenten der Wicklungsstruktur eingesetzt werden, die geometrisch komplex und hinsichtlich der Fertigungstoleranzen sensibel sind. Die Fertigung der Wicklungsstruktur erfolgt zweiteilig: Zunächst wird die Basiswicklungsbaugruppe mit den offenen Leiterschleifen hergestellt, wodurch die Einbringung des Statorkerns mittels eines einfachen Einführens in die offenen Enden der Leiterschleifen ermöglicht wird. Anschließend kann das additive Fertigungsverfahren für die Ausbildung des konstruktiv komplexen Wicklungskopfes eingesetzt werden.

Mit dem erfindungsgemäßen Verfahren werden die jeweiligen Vorteile des additiven Fertigungsverfahrens und herkömmlicher mechanischer Fertigungsschritte ausgenutzt, um einen Stator mit hoher Fertigungsgenauigkeit schnell und kostengünstig zu produzieren, der einen Wickelkopf mit vergleichsweise geringem Bauraum aufweist.

Wie obenstehend bereits erläutert, kann gemäß dem erfindungsgemäßen Verfahren zur Herstellung eines Stators die Fertigung der Basiswicklungsbaugruppe entweder mittels eines additiven Herstellungsverfahrens oder mittels eines herkömmlichen Verfahrens wie beispielsweise eines Stanzbiegeverfahrens erfolgen, je nach Anforderung an die Genauigkeit der Basiswicklungsbaugruppe. In einer vorteilhaften Weiterbildung der Erfindung weist der Statorkern ein Joch auf, über das die Polkerne verbunden sind, wobei der Statorkern mit den Polkernen in die offenen Enden der einseitig offenen Leiterschleifen eingeführt wird. Mit dieser Ausgestaltung des Statorkerns ist eine konstruktiv einfache und robuste Lösung für den Statorkern geschaffen, die ein einfaches und fehlerunanfälliges Einbringen des Statorkerns in die einseitig offenen Leiterschleifen ermöglicht.

In einer weiteren vorteilhaften Weiterbildung der Erfindung ist der Statorkern einstückig ausgebildet, und/oder wird durch ein additives Fertigungsverfahren hergestellt. Dies ermöglicht eine präzise Fertigung des Statorkerns. Die einstückige Ausbildung des Statorkerns trägt zu einer Vereinfachung der Herstellungsvorgangs bei, weil das Einbringen der Polkerne in die einseitig offenen Leiterschleifen in einem einzigen Arbeitsschritt erfolgt. Zudem wird mit einem einstückigen Statorkern ein mechanisch besonders robuster Stator erhalten.

Es ist ferner bevorzugt, dass der Statorkern aus einem weichmagnetischen Material, insbesondere aus FeSi, FeSO₄ oder amorphen Eisenwerkstoffen, hergestellt ist. Dies führt zu einer Reduktion der Leistungsverluste bei der Bestromung des Stators. Wird der Statorkern mittels eines additiven Fertigungsverfahrens hergestellt, werden vorzugsweise weichmagnetische Pulververbundwerkstoffe zur Fertigung des Statorkerns eingesetzt.

Es ist weiterhin bevorzugt, dass vor dem Ausbilden des Wickelkopfes die Verbindungsstrukturen entfernt werden. Dadurch kann sichergestellt werden, dass die Verbindungsstrukturen keine unerwünschten Kurzschlüsse zwischen den Leiterschleifen der Basiswicklungsbaugruppe hervorrufen. Sofern die Verbindungsstrukturen Distanzhalter beinhalten, die eine Führung für die Einbringung des Statorkerns in die offenen Leiterschleifen durch Aufschieben auf die Basiswicklungsbaugruppe durch die offenen Enden der Leiterschleifengruppen bereitstellen, werden diese mit den Verbindungsstrukturen entfernt. Die Entfernung der Verbindungsstrukturen kann beispielsweise durch ein mechanisches Verfahren wie Fräsen erfolgen.

In einer vorteilhaften Weiterbildung der Erfindung wird vor dem Einbringen des Statorkerns eine elektrisch isolierende Schicht zur Vermeidung eines elektrischen Kontakts zwischen den Leiterschleifengruppen und dem Statorkern auf der Innenseite der geschlossenen Enden der einseitig offenen Leiterschleifen angebracht. Dadurch wird ein elektrischer Kontakt zwischen den Leiterschleifen und dem Stator vermieden, der zu Kurzschlüssen der Wicklungen des Stators führen kann. Die isolierende Schicht kann als Festmaterial oder als Beschichtung ausgebildet sein.

In einer vorteilhaften Weiterbildung der Erfindung ist die elektrisch isolierende Schicht durch eine Isolatorplatte gebildet, die auf die offenen Enden der einseitig offenen Leiterschleifen aufgesteckt wird, so dass die Innenseiten der geschlossenen Enden der einseitig offenen Leiterschleifen von der Isolatorplatte bedeckt sind. Dies stellt eine konstruktiv einfache Maßnahme dar, um die Isolierung zwischen dem Statorkern und der Innenseite der geschlossenen Enden der Leiterschleifen sicherzustellen.

Die Isolatorplatte ist vorzugsweise aus einem temperaturbeständigen Isolationsmaterial wie beispielsweise Polyetherhetherketon (PEEK), einem Material mit hoher Wärmeleitfähigkeit wie Aluminiumoxid (Al₂O₃), oder einem geeigneten Kunststoff mit hoher thermischer Stabilität gebildet. Die Isolatorplatte kann dabei neben ihrer Isolierungsfunktion als Abstandhalter zwischen dem Statorkern und den Leiterschleifen dienen.

Die Dicke der Isolatorplatte kann dabei so gewählt werden, dass ein gewünschter Abstand zwischen dem Statorkern und den Leiterschleifen einstellbar ist. Vorzugsweise ist die Isolatorplatte einteilig und weist Aussparungen für die offenen Enden der Leiterschleifen auf, die so dimensioniert und angeordnet sind, dass die Isolatorplatte auf die offenen Enden der Leiterschleifen aufgesteckt und bis zu der Innenseite der geschlossenen Enden der Leiterschleifen geführt werden kann.

Die Isolatorplatte kann auf der Seite, die im aufgesteckten Zustand der Isolatorplatte den Innenseiten der geschlossen Enden der Leiterschleifen zugewandt ist, Vorsprünge aufweisen, die so angeordnet sind, dass sie beim Aufstecken der Isolatorplatte in die Lücken zwischen den offenen Leiterschleifen eingreifen. Dadurch kann die Positionierung der Isolatorplatte beim Aufstecken erleichtert werden. Alternativ können auf der Innenseite der geschlossenen Enden der einseitig offenen Leiterschleifen Vorsprünge vorgesehen sein, die in auf der Isolatorplatte ausgebildete Vertiefungen eingreifen, wenn die Isolatorplatte auf die Basiswicklungsbaugruppe aufgesteckt wird.

In einer alternativen vorteilhaften Weiterbildung der Erfindung ist die elektrisch isolierende Schicht durch ein Beschichtungsmaterial gebildet, das auf die Innenseite der geschlossenen Enden der Leiterschleifen aufgebracht wird. Das Beschichtungsmaterial kann durch einen temperaturbeständigen Isolierlack gebildet sein, der auf die Innenseite der geschlossenen Enden der einseitig offenen Leiterschleifen aufgesprüht oder aufgetragen wird.

In einer vorteilhaften Weiterbildung der Erfindung wird bei dem Einbringen des Statorkerns ein Isolierstoff, vorzugsweise Isolierpapier, zwischen den Statorkern und die einseitig offenen Leiterschleifen eingebracht. Dadurch wird die elektrische Isolierung zwischen dem Statorkern und der Basiswicklungsbaugruppe weiter verbessert. Der Isolierstoff kann an den Abschnitten der einseitig offenen Leiterschleifen vorgesehen werden, die sich zwischen den Stirnseiten des Stators erstrecken, insbesondere wenn die Innenseiten der geschlossen Enden der Leiterschleifen mittels der oben beschriebenen elektrisch isolierenden Schicht gegenüber dem Statorkern isoliert sind, um eine vollständige Isolierung zwischen der Basiswicklungsbaugruppe und dem Statorkern sicherzustellen.

In einer vorteilhaften Weiterbildung der Erfindung werden nach dem Einbringen des Statorkerns die verbleibenden Zwischenräume zwischen der Basiswicklungsbaugruppe und dem Statorkern mit einem isolierenden Medium, vorzugsweise mit einem Epoxidharz, ausgegossen. Dadurch wird einerseits eine elektrische Isolierung zwischen den Leiterschleifen bereitgestellt, andererseits werden die Leiterschleifen in dem Stator mechanisch fixiert.

Gemäß einem dritten Aspekt der Erfindung wird vor dem Ausbilden des Wickelkopfes ein bedruckbares Substrat auf die Stirnseite der Statorbasisbaugruppe mit den offenen Enden der einseitig offenen Leiterschleifen aufgelegt, das leitende Strukturen zum Verbinden der einseitig offenen Leiterschleifen enthält. Dies erlaubt ein sicheres und reproduzierbares Verbinden der einseitig offenen Leiterschleifen zu Statorwicklungen und vermindert das Risiko unerwünschter Kurzschlüsse zwischen den Statorwicklungen, da die leitenden Strukturen zum Schließen der offenen Leiterschleifen auf dem bedruckbaren Substrat voneinander und gegenüber dem Statorkern elektrisch isoliert sind.

Die Vorteile des Auflegens des bedruckbaren Substrats ergeben sich insbesondere bei einer Fertigung des Wickelkopf mittels eines additiven Herstellungsverfahrens. Die leitenden Strukturen auf dem Substrat bilden eine Startschicht für das additive Herstellungsverfahren des Wickelkopfes, auf welcher der additive Fertigungsprozess zum Ausbilden von Verbindungleitern beginnt, mit denen die offenen Leiterschleifen verbunden werden. somit muss der isolierende Teil des bedruckbaren Substrats keine besonderen Anforderungen hinsichtlich der additiven Fertigung des Wickelkopfes erfüllen. Die Verbindungsleiter werden im Wesentlichen senkrecht zur Ebene des Substrats gefertigt und schichtweise aufgebaut. Die Verbindungsleiter bilden eine elektrisch leitende Verbindung zwischen den offenen Enden der Leiterschleifen und den leitenden Strukturen auf dem bedruckbaren Substrat, wobei nur ein geringer Spalt zwischen den offenen Leiterenden und der leitenden Struktur auf dem Substrat überbrückt werden muss.

Es ist hierbei bevorzugt, dass die Verbindungsleiter des Wickelkopfes kreuzungsfrei ausgebildet werden, indem nach der Ausbildung der ersten Schicht des Wickelkopfes die Verbindungsleiter in einer Richtung im Wesentlichen senkrecht zu der Ebene des Substrats auf der ersten Schicht aufgebaut werden.

Zunächst besteht zwischen den offenen Enden der Leiterschleifen und den leitenden Strukturen auf dem Substrat ein Spalt, der durch die erste mittels des additiven Herstellungsverfahrens aufgebrachte Schicht geschlossen wird, so dass eine physikalische Verbindung zwischen den offenen Enden der Leiterschleifen und den leitenden Strukturen auf dem Substrat gebildet wird. Danach wird der Wickelkopf bis zum Erreichen einer erforderlichen Höhe des Stators aufgebaut, indem auf der ersten mittels des additiven Herstellungsverfahrens aufgebrachten Schicht der Wickelkopf weiter aufgebaut wird. Durch den Aufbau der Verbindungsleitungen des Wickelkopfes bis zu einer bestimmten Höhe über die erste Schicht hinaus wird die Leitfähigkeit der Verbindungsleitungen erhöht, so dass der Wirkungsgrad der elektrischen Maschine, in der der erfindungsgemäß hergestellte Stator eingesetzt wird, wesentlich erhöht werden kann.

Durch den Aufbau der Verbindungsleitungen des Wickelkopfes in Höhenrichtung wird eine Querschnittvergrößerung der Verbindungsleitungen des Wickelkopfes erreicht, mit der eine eventuell schlechtere Leitfähigkeit des Materials der Verbindungsleitungen des Wickelkopfes im Vergleich zum Material der Basiswicklungsbaugruppe kompensiert werden kann. Hierzu wird die Bauhöhe der Verbindungsleitungen in einer Richtung im Wesentlichen senkrecht zu der Ebene des Substrats je nach Bedarf entsprechend vergrößert.

Die erfindungsgemäße Aufgabe kann insbesondere auch dann gelöst werden, wenn das oben beschriebene Verfahren zur Ausbildung des Wickelkopfes mittels eines additiven Herstellungsverfahrens unter Verwendung des bedruckbaren Substrats mit einer Statorbasisbaugruppe eingesetzt wird, deren Leiterschleifen mittels eines konventionellen Verfahrens wie eines Stanzbiegeverfahrens hergestellt wurden.

Insgesamt wird gemäß dem dritten Aspekt der Erfindung ein Verfahren zum Herstellen eines Stators bereitgestellt, das die folgenden Schritte aufweist:
- Bereitstellen einer Statorbasisbaugruppe mit einer Basiswicklungsbaugruppe und einem Statorkern, wobei die Basiswicklungsbaugruppe eine Vielzahl von Leiterschleifengruppen aufweist, die jeweils aus einer Vielzahl von einseitig offenen Leiterschleifen gebildet sind, wobei die geschlossenen Enden der einseitig offenen Leiterschleifen an einer Stirnseite der Basiswicklungsbaugruppe angeordnet sind und die offenen Enden an der gegenüberliegenden Stirnseite der Basiswicklungsbaugruppe angeordnet sind, und wobei der Statorkern derart in der Basiswicklungsbaugruppe angeordnet ist, dass in jeder Leiterschleifengruppe mindestens ein Polkern angeordnet ist;
- Auflegen eines bedruckbaren Substrats auf die Stirnseite der Statorbasisbaugruppe mit den offenen Enden der Leiterschleifen;
- Ausbilden eines Wickelkopfes auf den offenen Enden der einseitig offenen Leiterschleifen und dem bedruckbaren Substrat mittels eines additiven Herstellungsverfahrens.

Die oben beschriebenen vorteilhaften Weiterbildungen betreffend das bedruckbare Substrat und die Ausbildung des Wickelkopfes sind im Zusammenhang mit dem beschriebenen Verfahren anwendbar.

In einer vorteilhaften Weiterbildung ist das bedruckbare Substrat aus einem nichtleitenden Substrat, vorzugsweise aus Aluminiumoxid (Al₂O₃) oder Direct Copper Bonding (DCB)-Keramiken, gebildet, wobei die leitenden Strukturen aus einem elektrisch leitenden Material, vorzugsweise aus Kupfer, gebildet sind, die derart angeordnet sind, dass sie nach dem Auflegen des bedruckbaren Substrats zum Verbinden bzw. Schließen der offenen Leiterschleifen mit den offenen Enden verbindbar sind. Vorzugsweise ist das bedruckbare Substrat aus strukturierten Direct Copper Bonding (DCB)-Keramiken gefertigt. DCB-Keramiken können mit einer hohen Fertigungsgenauigkeit hergestellt werden und erlauben eine zuverlässige und reproduzierbare Kontaktierung der offenen Enden der Leiterschleifen.

Es ist ferner bevorzugt, dass das bedruckbare Substrat Ausnehmungen aufweist, die in Größe und Position den offenen Enden der Leiterschleifen der Basiswicklungsbaugruppe entsprechen. Das bedruckbare Substrat wird dann auf so auf die Stirnseite der Statorbasisbaugruppe mit den offenen Enden der Leiterschleifen aufgelegt, dass die offenen Enden der Leiterschleifen durch die Ausnehmungen des bedruckbaren Substrats ragen und das bedruckbare Substrat auf dem Statorkern aufliegt.

Die Dicke des bedruckbaren Substrats und der darauf ausgebildeten leitenden Strukturen ist dabei vorzugsweise so gewählt, dass die leitenden Strukturen und die offenen Enden der einseitig offenen Leiterschleifen nach Auflegen des bedruckbaren Substrats auf der gleichen Höhe abschließen. Dies erlaubt eine einfache Verbindung der offenen Enden der Leiterschleifen mit den leitenden Strukturen auf dem bedruckbaren Substrat, insbesondere mittels eines additiven Herstellungsverfahrens.

Auf der derart gebildeten Struktur mit verbundenen Leiterschleifen können die Verbindungsleitungen des Wickelkopfes aufgebaut werden.

Die Herstellung der leitenden Strukturen auf dem isolierenden Substrat kann durch Bedrucken erfolgen, oder mittels eines Laserschmelzverfahrens (Direct Metal Laser Sintering, DMLS), indem ein Substrat aus Aluminiumoxid (Al₂O₃) mit einem Metall bei Prozesstemperaturen zwischen 400°C und 800°C bedruckt wird. Alternativ kann ein thermisches Spritzen, beispielsweise Plasma- oder Kaltgasspritzen, mit einer Maske eingesetzt werden, oder DCB-Substrate mittels Ätzen oder Lasern strukturiert werden.

In einer vorteilhaften Weiterbildung der Erfindung erfolgt das Ausbilden des Wickelkopfes und/oder die Ausbildung von elektrischen Anschlüssen für die Leiterschleifengruppen mittels eines additiven Fertigungsverfahrens. Dies vereinfacht das Herstellungsverfahren, da kein separater Prozessschritt für die Ausbildung der elektrischen Anschlüsse vorgesehen werden muss.

Die genannte Aufgabe wird weiterhin insbesondere gelöst durch eine Basiswicklungsbaugruppe eines Stators für eine elektrische Maschine, hergestellt nach dem obenstehend beschriebenen Verfahren.

Die genannte Aufgabe wird außerdem insbesondere gelöst durch einen Stator für eine elektrische Maschine, hergestellt nach dem obenstehend beschriebenen Verfahren.

Die erfindungsgemäße Basiswicklungsbaugruppe und der erfindungsgemäße Stator haben ähnliche Vorteile, wie sie bereits im Zusammenhang mit den erfindungsgemäßen Verfahren zur Herstellung der Basiswicklungsbaugruppe und des Stators beschrieben wurden. Insbesondere sind einige oder alle bereits beschriebenen strukturellen Merkmale, die durch die beschriebenen Herstellungsverfahren bereitgestellt werden, auf die hergestellte Basiswicklungsbaugruppe und den hergestellten Stator übertragbar. Die so bereitgestellte Basiswicklungsbaugruppe und der so bereitgestellte Stator zeichnen sich insbesondere durch eine hohe Fertigungsgenauigkeit, eine kostengünstige und einfache Herstellbarkeit sowie eine platzsparende Ausführung des Wickelkopfes aus.

Ausführungsbeispiele der Erfindung werden nachfolgend anhand der Zeichnungen näher erläutert. Es zeigen:
- Figur 1: eine schematische perspektivische Ansicht einer Leiterschleifengruppe;
- Figur 2: eine schematische perspektivische Ansicht einer Basiswicklungsbaugruppe, die aus Leiterschleifengruppen gemäß Figur 1 aufgebaut ist;
- Figur 3: die Basiswicklungsbaugruppe aus Figur 2 mit einer aufgesteckten Isolatorplatte;
- Figur 4: eine Statorbasisbaugruppe aufweisend die Basiswicklungsbaugruppe aus Figur 3 mit einem eingebrachten Statorkern;
- Figur 5: eine Draufsicht eines bedruckbaren Substrats zum Auflegen auf die Stirnseite der Statorbasisbaugruppe mit den offenen Enden der einseitig offenen Leiterschleifen der Basiswicklungsbaugruppe;
- Figur 6: die Statorbasisbaugruppe aus Figur 4 mit dem aufgelegten bedruckbaren Substrat aus Figur 5;
- Figur 7: eine Detailansicht der oberen Stirnseite der Statorbasisbaugruppe mit den offenen Enden der Leiterschleifen mit aufgelegtem bedruckbarem Substrat;
- Figur 8: eine Detailansicht der oberen Stirnseite der Statorbasisbaugruppe mit aufgelegtem bedruckbarem Substrat und darauf ausgebildetem Wickelkopf; und
- Figur 9: einen fertiggestellten Stator mit einem Wickelkopf, der auf den offenen Enden der einseitig offenen Leiterschleifen der Basiswicklungsgruppe ausgebildet ist.

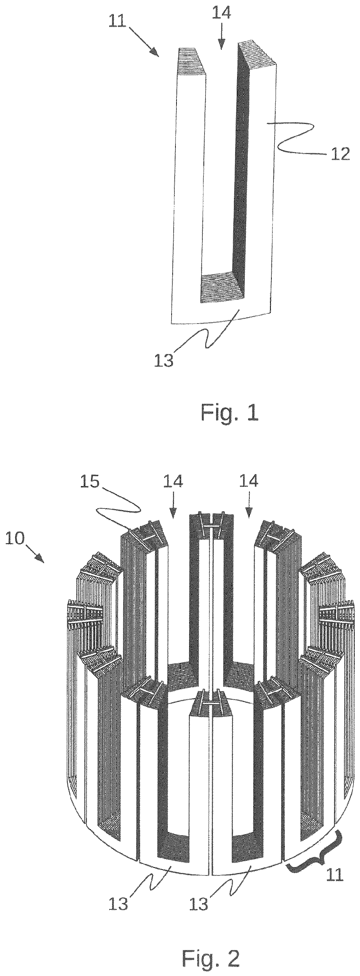

Figur 1 zeigt eine schematische Darstellung einer Leiterschleifengruppe 11, die als Teil einer Basiswicklungsbaugruppe 10 bei einem Herstellungsverfahren gemäß der vorliegenden Erfindung ausgebildet wird. Die Leiterschleifengruppe 11 weist eine Vielzahl von einseitig offenen Leiterschleifen 12 auf. Die einseitig offenen Leiterschleifen 12 weisen jeweils ein geschlossenes Ende 13 und ein offenes Ende 14 auf. Die einseitig offenen Leiterschleifen 12 sind in der Leiterschleifengruppe 11 so angeordnet, dass die offenen Enden 14 der einseitig offenen Leiterschleifen 12 eine gemeinsame Öffnung der Leiterschleifengruppe 11 bilden. Zwischen den einseitig offenen Leiterschleifen 12 ist jeweils ein vorgegebener Abstand vorgesehen.

Figur 2 zeigt eine schematische Ansicht einer Basiswicklungsbaugruppe 10, die aus mehreren der in Figur 1 gezeigten Leiterschleifengruppen 11 aufgebaut wird. Die Basiswicklungsgruppe 10 der Figur 2 ist als Komponente für die Fertigung eines Stators einer rotierenden elektrischen Maschine ausgebildet. Die Leiterschleifengruppen 11 sind entlang einer zylindrischen Mantelfläche angeordnet. Die geschlossenen Enden 13 aller einseitig offenen Leiterschleifen 12 sind an einer Seite der Basiswicklungsbaugruppe 10 angeordnet, die einer Stirnseite des fertigen Stators entspricht. Die offenen Enden 14 aller einseitig offenen Leiterschleifen 12 sind auf der gegenüberliegenden Seite der Basiswicklungsbaugruppe 10 angeordnet.

Die in Figur 2 gezeigte Basiswicklungsbaugruppe 10 wird vorzugsweise mittels eines additiven Fertigungsverfahrens hergestellt, indem die Leiterschleifengruppen 11 von den geschlossenen Enden 13 aus beginnend nach oben zu den offenen Enden 14 hin schichtweise aufgebaut werden. Die Fertigung der Leiterschleifengruppen 11 erfolgt auf einer (nicht gezeigten) Bauplatte, auf die die erste Schicht der zu fertigenden Basiswicklungsbaugruppe 10 aufgebracht und verfestigt wird.

Die Bauplatte ist entlang der (vertikalen) Aufbaurichtung der Basiswicklungsbaugruppe 10 verfahrbar, um nach dem Auftragen und Verfestigen von Aufbaumaterial in einer Schicht durch eine vertikale Bewegung die Relativposition zwischen einer Beschichtungseinheit und der Bauplatte so verändern zu können, dass eine neue Bearbeitungsebene eingestellt wird.

Auf den offenen Enden 14 der Leiterschleifengruppen 11 werden Verbindungsstrukturen 15 ausgebildet, die in dem in Figur 2 gezeigten Ausführungsbeispiel H-förmig sind. Die zwei parallelen Streben jeder Verbindungsstruktur 15 verbinden die einseitig offenen Leiterschleifen 12 innerhalb einer Leiterschleifengruppe 11 miteinander, die Querstrebe zwischen den zwei parallelen Streben jeder Verbindungsstruktur stellt jeweils eine mechanische Verbindung zwischen benachbarten Leiterschleifengruppen 11 her.

Insgesamt wird durch die Ausbildung der Verbindungsstrukturen 15 damit die gesamte Basiswicklungsbaugruppe 10 an den offenen Enden der Leiterschleifengruppen 11 mechanisch stabilisiert. Dies ermöglicht eine stabile Weiterverarbeitung der Basiswicklungsbaugruppe 10 mit definiertem Abstand der Leiterschleifen zueinander in den nächsten Verarbeitungsschritten.

Wie in Figur 2 zu erkennen ist, ragen die Verbindungsstrukturen 15 nicht über die von den offenen Enden 14 der einseitig offenen Leiterschleifen 12 aufgespannten Flächen an der oberen Seite der Basiswicklungsbaugruppe 10 hinaus. Dies erleichtert das weiter unten beschriebene Einbringen eines Statorkerns in die Öffnungen der Basiswicklungsbaugruppe 10.

In dem vorliegenden Ausführungsbeispiel sind die Verbindungsstrukturen 15 H-förmig ausgebildet. die Verbindungsstrukturen 15 können auch eine andere Formgebung aufweisen, die geeignet ist, die mechanische Stabilisierung der einseitig offenen Leiterschleifen 12 in der Basiswicklungsbaugruppe 10 sicherzustellen.

Die Verbindungsstrukturen 15 können auch so ausgebildet werden, dass sie teilweise über die von den offenen Enden 14 der einseitig offenen Leiterschleifen 12 aufgespannten Flächen herausragen. Beispielsweise könnten die Verbindungsstrukturen 15 in dem in Figur 2 gezeigten Ausführungsbeispiel derart gefertigt werden, dass sich die parallelen Streben der H-förmigen Verbindungsstruktur 15 und/oder die Querstrebe über die Kanten der von den offenen Enden 14 der einseitig offenen Leiterschleifen 12 aufgespannten Flächen um einen vorgegebenen Abstand hinaus erstrecken. Damit können die Verbindungsstrukturen 15 gleichzeitig als Distanzhalter bzw. Führungselemente für einen Statorkern dienen, der über die offenen Enden 14 der Leiterschleifengruppen 11 in die Basiswicklungsbaugruppe 10 eingebracht wird.

Es sei bemerkt, dass die Konfiguration der Leiterschleifengruppen 11 in der Basiswicklungsbaugruppe 10 nicht auf die in Figur 2 dargestellte Konfiguration beschränkt ist. Es ist auch möglich, dass einige der einseitig offenen Leiterschleifen 12 so ausgebildet sind, dass sie sich über mehrere benachbarte Leiterschleifengruppen 11 erstrecken. Damit ist es möglich, eine verteilte Wicklung herzustellen, bei der einige der einseitig offenen Leiterschleifen 12 mehr als einen Pol einschließen. Entscheidend ist lediglich, dass die offenen Enden 14 der einseitig offenen Leiterschleifen 12 in der Basiswicklungsbaugruppe 10 so angeordnet sind, dass ein Einbringen von Bauelementen in die Basiswicklungsbaugruppe 10 über die offenen Enden 14 der einseitig offenen Leiterschleifen 12 möglich ist.

In einem weiteren, nicht gezeigten Ausführungsbeispiel werden an mindestens einer der einseitig offenen Leiterschleifen 12 an einer oder mehreren den Innenkanten oder der Außenseite der einseitig offenen Leiterschleifen 12 Vorsprünge ausgebildet, die als zusätzliche Führung für einen einzubringenden Statorkern dienen können. Diese Vorsprünge werden so gefertigt, dass sie nach dem Einbringen des Statorkerns entfernt werden können.

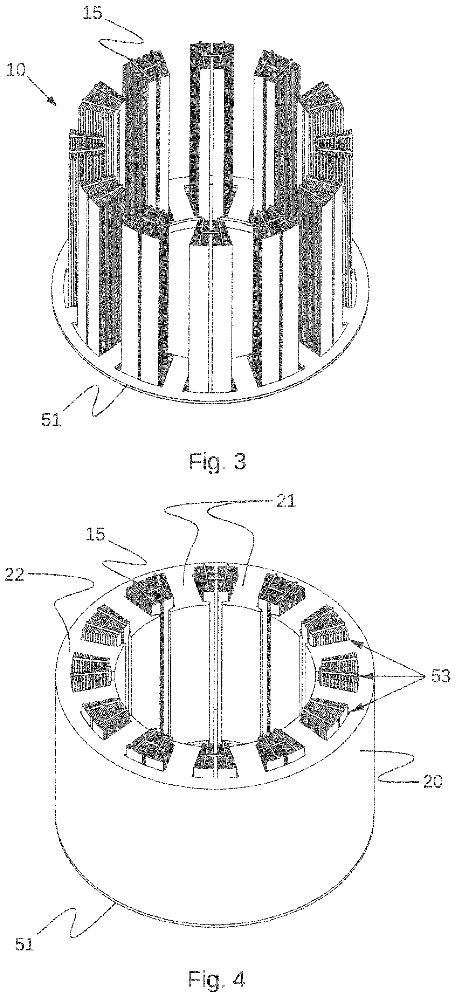

Nach der Fertigung der Basiswicklungsbaugruppe 10 können die Innenseiten der geschlossenen Enden 13 der einseitig offenen Leiterschleifen 12 elektrisch isoliert werden, indem eine elektrisch isolierende Schicht auf die Innenseiten der geschlossenen Enden 13 aufgebracht wird. Figur 3 zeigt die Basiswicklungsbaugruppe 10 aus Figur 2 mit einer Isolatorplatte 51. Die Isolatorplatte 51 weist Ausnehmungen auf, die in Größe und Position den Flächen entsprechen, die durch die offenen Enden 14 der einseitig offenen Leiterschleifen 12 aufgespannt werden. Dadurch kann die Isolatorplatte 51 auf die offenen Enden 14 der Leiterschleifengruppen 11 aufgesteckt werden, wie dies in Figur 3 gezeigt ist.

Als nächster Schritt der Statorherstellung wird die Basiswicklungsbaugruppe mit einem Statorkern zu einer Statorbasisbaugruppe zusammengefügt, indem ein Statorkern mit einer Vielzahl von Polkernen in die einseitig offenen Leiterschleifen 12 der Leiterschleifengruppen 11 eingebracht wird. Figur 4 zeigt die Basiswicklungsbaugruppe 10 aus Figur 3, in die ein Statorkern 20 eingebracht wurde. Der Statorkern 20 ist einteilig hergestellt und weist eine Vielzahl von Polkernen 21 auf, deren Anzahl der Anzahl von Öffnungen, die durch die offenen Enden der einseitig offenen Leiterschleifen 12 an der oberen Seite der Basiswicklungsbaugruppe 10 gebildet werden, entspricht. Die Polkerne 21 sind über ein zylindrisches Joch 22 miteinander verbunden.

Der Statorkern 20 wird in die einseitig offenen Leiterschleifen 12 der Leiterschleifengruppen 11 eingebracht, indem er mit den Polkernen 21 in die offenen Enden 14 der einseitig offenen Leiterschleifen 12 eingesteckt wird. Die zuvor auf die Basiswicklungsgruppe 10 aufgesteckte Isolatorplatte 51 stellt eine elektrische Isolierung zwischen der Innenseite der geschlossenen Enden 13 der Leiterschleifengruppen 11 und dem Statorkern 20 sicher. Zwischen die sich in den Figuren vertikal erstreckenden Abschnitte der Leiterschleifengruppen 11 und die Polkerne 21 wird ein (nicht gezeigter) Isolierstoff wie ein Isolierpapier eingebracht, um eine vollständige elektrische Isolierung zwischen dem Statorkern 20 und der Basiswicklungsbaugruppe 10 zu erreichen.

Zwischen dem Statorkern 20 und den einseitig offenen Leiterschleifen 12 der Basiswicklungsbaugruppe 10 verbleiben Zwischenräume, die mit einem isolierenden Medium befüllt werden, wie in Figur 4 mit dem Bezugszeichen 53 angedeutet ist. Das isolierende Medium 53 ist vorzugsweise durch ein isolierendes Harz gebildet, so dass die Zwischenräume mit dem isolierenden Medium 53 ausgegossen werden können. Dadurch werden die einseitig offenen Leiterschleifen 12 einerseits voneinander elektrisch isoliert, und andererseits mechanisch in der Anordnung aus der Basiswicklungsbaugruppe 10 und dem eingebrachten Statorkern 20 fixiert.

Nach dem Ausgießen der aus der Basiswicklungsgruppe 10 und dem Statorkern 20 bestehenden Statorbasisbaugruppe werden die Verbindungsstrukturen 15 entfernt, so dass die offenen Enden 14 der einseitig offenen Leiterschleifen 12 an der Oberseite der Basiswicklungsbaugruppe 10 freigelegt sind. Die einseitig offenen Leiterschleifen 12 können nun an den offenen Enden 14 zu Wicklungen vervollständigt bzw. verbunden werden, indem auf den offenen Enden 14 ein Wickelkopf ausgebildet wird.

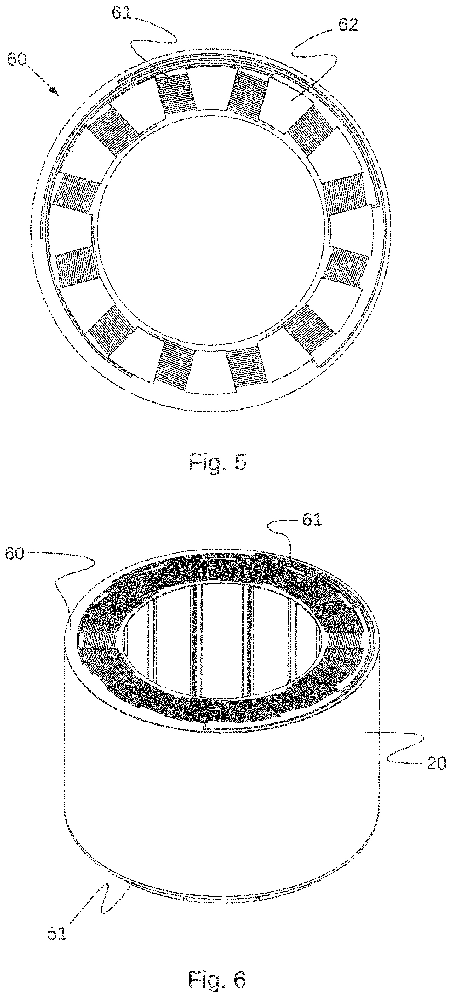

Um die Fertigung des Wickelkopfes zu erleichtern und die Fertigungsgenauigkeit beim Verbinden der Leiterschleifen zu verbessern, wird in einer bevorzugten Ausführungsform der Erfindung auf die Stirnseite der Statorbasisbaugruppe mit den offenen Enden 14 der einseitig offenen Leiterschleifen 12 ein bedruckbares Substrat aufgelegt. Figur 5 zeigt eine mögliche Konfiguration eines bedruckbaren Substrats 60 in Draufsicht. Das bedruckbare Substrat 60 ist aus einem elektrisch isolierenden Material, vorzugsweise aus Al₂O₃ gefertigt und weist leitende Strukturen 61 auf, die der Geometrie des noch zu fertigenden Wickelkopfes entsprechen. Das bedruckbare Substrat 60 kann aus strukturierten DCB-Keramiken gebildet sein. Das bedruckbare Substrat 60 weist ferner Ausnehmungen 62 auf, die in Größe und Position den von den offenen Enden 14 der einseitig offenen Leiterschleifen 12 aufgespannten Flächen entsprechen.

Figur 6 zeigt die Statorbasisbaugruppe mit der Basiswicklungsbaugruppe 10 mit eingebrachtem Statorkern 20 aus Figur 4 mit dem aufgelegten bedruckbaren Substrat 60 aus Figur 5. Nach dem Auflegen des bedruckbaren Substrats 60 werden die leitenden Strukturen 61 mit den offenen Enden 14 der einseitig offenen Leiterschleifen 12 der Basiswicklungsbaugruppe 10 verbunden, um die Wicklungen des Stators zu auszubilden.

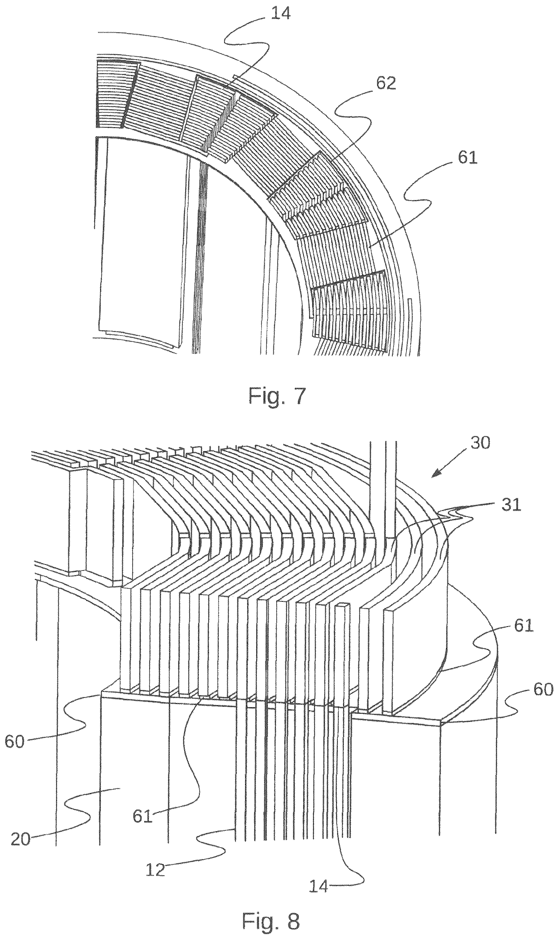

Figur 7 zeigt eine Detailansicht der oberen Stirnseite der Statorbasisbaugruppe mit dem aufgelegtem bedruckbarem Substrat 60. Es ist zu erkennen, dass das bedruckbare Substrat 60 mit seiner elektrisch isolierenden Schicht auf dem Statorkern 20 aufliegt und die offenen Enden 14 der einseitig offenen Leiterschleifen 12 durch die Ausnehmungen 62 in dem bedruckbaren Substrat 60 ragen. Die leitenden Strukturen 61 des bedruckbaren Substrats 60 reichen bis an die Ränder der Ausnehmungen 62 heran und können mit den offenen Enden der einseitig offenen Leiterschleifen 12 verbunden werden, um die einseitig offenen Leiterschleifen 12 zu verbinden. Die Verbindungen können mittels eines additiven Herstellungsverfahrens äußerst effizient und präzise hergestellt werden.

Die Verbindungsleitungen des Wickelkopfes werden ausgebildet, in dem mittels eines schichtweisen additiven Fertigungsverfahrens die offenen Enden 14 der einseitig offenen Leiterschleifen 12 mit den leitenden Strukturen 61 verbunden werden. Dabei wird zunächst eine erste Schicht Aufbaumaterial für die Verbindungsleitungen des Wickelkopfes auf den offenen Enden 14 der einseitig offenen Leiterschleifen 12 und den leitenden Strukturen 61 ausgebildet, die eine physikalische Verbindung zwischen den offenen Enden 14 der einseitig offenen Leiterschleifen 12 und den leitenden Strukturen 61 auf dem Substrat ausbildet. Danach werden die Verbindungsleitungen des Wickelkopfes auf dieser ersten Schicht mittels des additiven Herstellungsverfahrens schichtweise weiter aufgebaut.

Der so gebildete Wickelkopf weist Verbindungsleitungen auf, die sich im Wesentlichen senkrecht zu der Ebene des bedruckbaren Substrats 60 erstrecken und vorzugsweise kreuzungsfrei aufgebaut werden. Durch den weiteren schichtweisen Aufbau der Verbindungsleitungen wird die Leitfähigkeit der Verbindungsleitungen verbessert. Somit können große Ströme übertragen werden.

Figur 8 zeigt eine perspektivische Schnittansicht eines Bereichs der oberen Stirnseite der Statorbasisbaugruppe mit aufgelegtem bedruckbarem Substrat 60 und darauf ausgebildetem Wickelkopf 30. Es sind die offenen Enden der einseitig offenen Leiterschleifen 12 zu erkennen, die durch eine Ausnehmung 62 des bedruckbaren Substrats 60 ragen. Das bedruckbare Substrat 60 liegt mit seiner isolierenden Fläche auf dem Statorkern 20 auf. Die Höhe des bedruckbaren Substrats 60 und der darauf ausgebildeten leitenden Strukturen 61 ist so gewählt, dass die leitenden Strukturen 61 auf der gleichen Höhe abschließen wie die offenen Enden 14 der einseitig offenen Leiterschleifen 12.

Auf den offenen Enden 14 der einseitig offenen Leiterschleifen 12 und den leitenden Strukturen 61 sind die Verbindungsleitungen 31 des Wickelkopfes 30 ausgebildet, indem eine erste Schicht auf den offenen Enden 14 der einseitig offenen Leiterschleifen 12 und den leitenden Strukturen 61 mittels eines additiven Herstellungsverfahrens in der Ebene ausgebildet wird, auf der die leitenden Strukturen 61 und die offenen Enden 14 der einseitig offenen Leiterschleifen 12 abschließen. Auf dieser ersten Schicht werden dann mittels des additiven Herstellungsverfahrens die Verbindungsleitungen 31 des Wickelkopfes 30 weiter aufgebaut, wie in Figur 8 gezeigt. Ein möglichweise vorhandener Spalt zwischen den offenen Enden 14 der einseitig offenen Leiterschleifen 12 und dem bedruckbaren Substrat 60 wird durch das additive Fertigungsverfahren überbrückt.

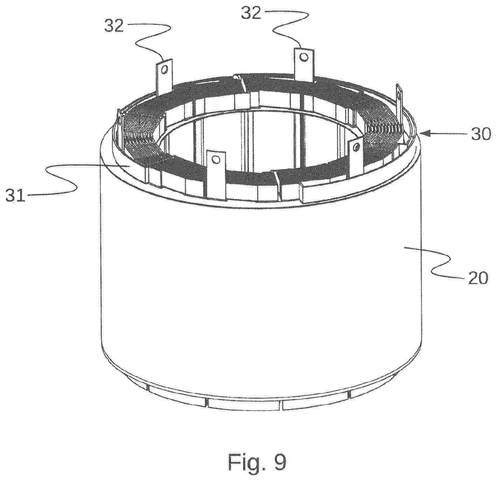

Figur 9 zeigt einen fertiggestellten Stator mit einem auf den offenen Enden 14 der einseitig offenen Leiterschleifen 12 ausgebildeten Wickelkopf 30. Der Wickelkopf 30 kann bis zum Erreichen einer erforderlichen Höhe des Stators aufgebaut werden. Wie in Figur 9 gezeigt ist, werden bei der Fertigung des Wickelkopfes 30 auch elektrische Anschlüsse 32 gefertigt, über die die Wicklungen des Stators mit Strom beaufschlagt werden können.

Das unter Bezug auf Figur 5 bis Figur 9 beschriebene Verfahren zur Ausbildung eines Wickelkopfes unter Verwendung eines bedruckbaren Substrats mittels eines additiven Fertigungsverfahrens kann auch mit einer Statorbasisbaugruppe eingesetzt werden, deren Basiswicklungsbaugruppe konventionell gefertigt ist, beispielsweise indem die einseitig offenen Leiterschleifen mittels eines Stanzbiegeverfahrens gefertigt und auf den Statorkern aufgesteckt werden. Entscheidend für die Einsetzbarkeit des beschriebenen Verfahrens zur Ausbildung des Wickelkopfes ist lediglich, dass die Stirnseite der Statorbasisbaugruppe mit den offenen Enden der Leiterschleifen so gebildet ist, dass ein bedruckbares Substrat wie oben beschrieben aufgelegt werden kann, so dass die offenen Enden der Leiterschleifen und die leitenden Strukturen des bedruckbaren Substrats derart angeordnet sind, dass auf ihnen der Wickelkopf aufgebaut werden kann.

Auf der Oberseite des Stators mit dem Wickelkopf 30 können bei den abschließenden Fertigungsschritten weitere, nicht gezeigte Komponenten ausgebildet werden. Beispielsweise können Leistungselektronikkomponenten in einfacher Weise in den Stator integriert werden, indem diese auf dem bedruckbaren Substrat integriert werden. Ebenso ist die Integration von Kühlstrukturen oder komplexeren elektrischen Anschlüssen wie Steckverbindern denkbar.

Das vorstehend dargestellte Herstellungsverfahren erlaubt es, einen Stator mit einer geometrisch komplexen und kompakten Wicklungsstruktur herzustellen, die aufgrund der additiven Fertigung der Basiswicklungsbaugruppe 10 mit hoher Präzision und Verlässlichkeit herstellbar ist. Die Aufbringung der Wicklungen auf die Polkerne 21 des Statorkerns 20 ist mit dem vorstehend beschriebenen Herstellungsverfahren in einfacher Weise und mit geringem Zeitaufwand möglich, da der Statorkern 20 lediglich in die durch die offenen Enden 14 der einseitig offenen Leiterschleifen 12 gebildeten Öffnungen der Basiswicklungsbaugruppe 10 eingeführt werden muss. Die Fertigung des Wickelkopfes 30 erfolgt in dem beschriebenen Ausführungsbeispiel ebenfalls mittels eines additiven Herstellungsverfahrens. Dies ermöglicht eine einfache und kostengünstige Fertigung eines Wickelkopfes 30 mit komplexer Geometrie und geringem Bauraumbedarf.

Die Erfindung wurde obenstehend anhand eines Stators für eine rotierende elektrische Maschine beschrieben. Das erfindungsgemäße Herstellungsverfahren ist bei der Fertigung von Statoren oder Rotoren aller elektrischen Maschinen wie einer rotierenden elektrischen Maschine ebenso einsetzbar wie bei der Fertigung von Statoren oder Rotoren eines Linearmotors, bei dem die Polkerne entlang einer Bewegungsrichtung eines Läufers des Linearmotors angeordnet sind. In diesem Fall werden die Leiterschleifengruppen der Basiswicklungsbaugruppe nicht entlang der Mantelfläche eines Zylinders gefertigt, sondern in einer linearen Konfiguration, bei der sie nebeneinander auf einer Geraden angeordnet sind. Der Statorkern ist in diesem Fall entsprechend mit linear nebeneinander angeordneten Polkernen ausgebildet und wird auf die linear konfigurierte Basiswicklungsgruppe aufgesteckt. Anschließend werden die offenen Enden der Leiterschleifengruppen durch die Ausbildung eines Wicklungskopfes geschlossen.

Nachfolgend werden noch weitere Aspekte der Erfindung offenbart und beansprucht, die jeweils für sich oder in Kombination, vorzugsweise in Kombination mit einem der obigen Aspekte zur Lösung der Aufgabe vorgeschlagen werden:
Aspekt 1: Verfahren zur Fertigung einer Basiswicklungsbaugruppe (10) eines Stators für eine elektrische Maschine mit einer Vielzahl von Leiterschleifengruppen (11), die jeweils aus einer Vielzahl von einseitig offenen Leiterschleifen (12) gebildet sind, wobei die geschlossenen Enden (13) der einseitig offenen Leiterschleifen (12) an einer Stirnseite der Basisbaugruppe (10) anordenbar sind und die offenen Enden (14) an der gegenüberliegenden Stirnseite der Basisbaugruppe (10) anordenbar sind,
   wobei das Fertigen der Basiswicklungsbaugruppe (10) einstückig mittels eines additiven Fertigungsverfahrens erfolgt, bei dem ein schichtweises Aufbringen und örtliches Verfestigen von Aufbaumaterial erfolgt,
   wobei bei der einstückigen Fertigung der Basiswicklungsgruppe (10) Verbindungsstrukturen (15) zur Erhöhung der mechanischen Stabilität auf den offenen Enden (14) der einseitig offenen Leiterschleifen (12) ausgebildet werden, die die einseitig offenen Leiterschleifen (12) innerhalb einer Leiterschleifengruppe (11) und/oder die Leiterschleifengruppen (11) miteinander starr verbinden, wobei die Verbindungsstrukturen (15) dazu vorgesehen sind, vor dem Ausbilden eines Wickelkopfes (30) auf den offenen Enden (14) der einseitig offenen Leiterschleifen (12) entfernt zu werden.
Aspekt 2: Verfahren nach Aspekt 1, wobei die Verbindungsstrukturen (15) Distanzhalter beinhalten, die dazu ausgebildet sind, eine Führung für das Aufschieben eines Statorkerns bereitzustellen.
Aspekt 3: Verfahren nach einem der vorhergehenden Aspekte 1 oder 2, wobei die einseitig offenen Leiterschleifen (12) Merkmale zur Fixierung einer Isolatorplatte (51) und/oder zur Führung eines Statorkerns (20) aufweisen.
Aspekt 4: Verfahren nach einem der vorhergehenden Aspekte 1 bis 3, wobei das Fertigen der Basiswicklungsbaugruppe (10) derart erfolgt, dass die einseitig offenen Leiterschleifen (12) eine rauhe Oberfläche aufweisen.
Aspekt 5: Verfahren nach einem der vorhergehenden Aspekte 1 bis 4, wobei die Basiswicklungsbaugruppe (10) auf einer Bauplatte gefertigt wird, derart, dass die geschlossenen Enden (13) der einseitig offenen Leiterschleifen (12) auf der Bauplatte angeordnet sind.
Aspekt 6: Verfahren zur Herstellung eines Stators für eine elektrische Maschine aufweisend die folgenden Schritte:
   - Herstellen einer Statorbasisbaugruppe durch Zusammenfügen einer Basiswicklungsbaugruppe (10), vorzugsweise hergestellt nach einem der vorherigen Aspekte 1 bis 5, und eines Statorkerns (20) mit einer Vielzahl von Polkernen (21),
      wobei die Basiswicklungsbaugruppe (10) eine Vielzahl von Leiterschleifengruppen (11) aufweist, die jeweils aus einer Vielzahl von einseitig offenen Leiterschleifen (12) gebildet sind, wobei die geschlossenen Enden (13) der einseitig offenen Leiterschleifen (12) an einer Stirnseite der Basiswicklungsbaugruppe (10) angeordnet sind und die offenen Enden (14) an der gegenüberliegenden Stirnseite der Basiswicklungsbaugruppe (10) angeordnet sind,
      wobei das Zusammenfügen der Basiswicklungsbaugruppe und des Statorkerns (20) derart erfolgt, dass in jeder Leiterschleifengruppe (11) mindestens ein Polkern (21) angeordnet ist; und
   - Ausbilden eines Wickelkopfes (30) auf der Stirnseite der Statorbasisbaugruppe mit den offenen Enden (14) der einseitig offenen Leiterschleifen (12).
Aspekt 7: Verfahren nach Aspekt 6, wobei der Statorkern (20) mit den Polkernen (21) in die offenen Enden (14) der einseitig offenen Leiterschleifen (12) eingebracht wird.
Aspekt 8: Verfahren nach Aspekt 6 oder 7, wobei der Statorkern (20) einstückig ausgebildet ist und/oder durch ein additives Fertigungsverfahren hergestellt wird.
Aspekt 9: Verfahren nach einem der Aspekte 6 bis 8, wobei der Statorkern (20) aus einem weichmagnetischen Material, insbesondere aus FeSi, FeSO₄ oder amorphen Eisenwerkstoffen, hergestellt ist.
Aspekt 10: Verfahren nach einem der Aspekte 6 bis 9, wobei vor dem Ausbilden des Wickelkopfes (30) die Verbindungsstrukturen (15) entfernt werden.
Aspekt 11: Verfahren nach einem der Aspekte 6 bis 10, wobei vor dem Einbringen des Statorkerns (20) eine elektrisch isolierende Schicht zur Vermeidung eines elektrischen Kontakts zwischen den Leiterschleifengruppen (11) und dem Statorkern (20) auf der Innenseite der geschlossenen Enden (13) der einseitig offenen Leiterschleifen (12) angebracht wird.
Aspekt 12: Verfahren nach Aspekt 11, wobei die elektrisch isolierende Schicht durch eine Isolatorplatte (51) gebildet ist, die auf die offenen Enden (14) der einseitig offenen Leiterschleifen (12) aufgesteckt wird, so dass die Innenseiten der geschlossenen Enden (13) der einseitig offenen Leiterschleifen (12) von der Isolatorplatte (51) bedeckt sind.
Aspekt 13: Verfahren nach Aspekt 11, wobei die elektrisch isolierende Schicht durch ein Beschichtungsmaterial gebildet ist, das auf die Innenseite der geschlossenen Enden (13) der einseitig offenen Leiterschleifen (12) aufgebracht wird.
Aspekt 14: Verfahren nach einem der Aspekte 6 bis 13, wobei bei dem Einbringen des Statorkerns (20) ein Isolierstoff (52), vorzugsweise Isolierpapier, zwischen den Statorkern (20) und die offenen Leiterschleifen (12) eingebracht wird.
Aspekt 15: Verfahren nach einem der Aspekte 6 bis 14, wobei nach dem Einbringen des Statorkerns (20) Zwischenräume zwischen der Basiswicklungsbaugruppe (10) und dem Statorkern (20) mit einem isolierenden Medium (53), vorzugsweise mit Epoxidharz, ausgegossen werden.
Aspekt 16: Verfahren nach einem der Aspekte 6 bis 15, wobei vor dem Ausbilden des Wickelkopfes (30) ein bedruckbares Substrat (60) auf die Stirnseite der Statorbasisbaugruppe mit den offenen Enden (14) der einseitig offenen Leiterschleifen (12) aufgelegt wird, das leitende Strukturen (61) zum Verbinden der einseitig offenen Leiterschleifen (12) enthält.
Aspekt 17: Verfahren nach Aspekt 16, wobei das bedruckbare Substrat (60) aus einem nichtleitenden Substrat, vorzugsweise aus Aluminiumoxid, gebildet ist, und wobei die leitenden Strukturen (61) aus einem elektrisch leitenden Material, vorzugsweise aus Kupfer, gebildet sind, die derart angeordnet sind, dass sie nach dem Auflegen des bedruckbaren Substrats (60) zum Verbinden der offenen Leiterschleifen (12) mit den offenen Enden (14) verbindbar sind.
Aspekt 18: Verfahren nach einem der Aspekte 6 bis 17, wobei das Ausbilden des Wickelkopfes (30) und/oder die Ausbildung von elektrischen Anschlüssen (32) für die Leiterschleifengruppen (11) mittels eines additiven Fertigungsverfahrens erfolgt.
Aspekt 19: Basiswicklungsbaugruppe (10) eines Stators für eine elektrische Maschine, hergestellt nach einem der Aspekte 1 bis 5.
Aspekt 20: Stator für eine elektrische Maschine, hergestellt nach einem der Aspekte 6 bis 18.

### Bezugszeichenliste:

- 10: Basiswicklungsbaugruppe
- 11: Leiterschleifengruppe
- 12: (einseitig) offene Leiterschleife
- 13: geschlossenes Ende
- 14: offenes Ende
- 15: Verbindungsstruktur

- 20: Statorkern
- 21: Polkern
- 22: Joch

- 30: Wickelkopf
- 31: Verbindungsleitung
- 32: elektrischer Anschluss

- 51: Isolatorplatte
- 53: isolierendes Medium

- 60: bedruckbares Substrat
- 61: leitende Struktur
- 62: Ausnehmungen

## Patentansprüche

1. Verfahren zur Herstellung eines Stators für eine elektrische Maschine aufweisend die folgenden Schritte:
Herstellen einer Statorbasisbaugruppe durch Zusammenfügen einer Basiswicklungsbaugruppe (10) und eines Statorkerns (20) mit einer Vielzahl von Polkernen (21),
i. wobei die Basiswicklungsbaugruppe (10) eine Vielzahl von Leiterschleifengruppen (11) aufweist, die jeweils aus einer Vielzahl von einseitig offenen Leiterschleifen (12) gebildet sind, wobei die geschlossenen Enden (13) der einseitig offenen Leiterschleifen (12) an einer Stirnseite der Basiswicklungsbaugruppe (10) angeordnet sind und die offenen Enden (14) an der gegenüberliegenden Stirnseite der Basiswicklungsbaugruppe (10) angeordnet sind,
ii. wobei das Zusammenfügen der Basiswicklungsbaugruppe und des Statorkerns (20) derart erfolgt, dass in jeder Leiterschleifengruppe (11) mindestens ein Polkern (21) angeordnet ist; und
Ausbilden eines Wickelkopfes (30) auf der Stirnseite der Statorbasisbaugruppe mit den offenen Enden (14) der einseitig offenen Leiterschleifen (12), wobei das Ausbilden des Wickelkopfes (30) mittels eines additiven Fertigungsverfahrens erfolgt.

2. Verfahren nach Anspruch 1, wobei der Statorkern (20) mit den Polkernen (21) in die offenen Enden (14) der einseitig offenen Leiterschleifen (12) eingebracht wird.

3. Verfahren nach einem der vorhergehenden Ansprüche, wobei der Statorkern (20) einstückig ausgebildet ist und/oder durch ein additives Fertigungsverfahren hergestellt wird.

4. Verfahren nach einem der vorhergehenden Ansprüche, wobei vor dem Einbringen des Statorkerns (20) eine elektrisch isolierende Schicht zur Vermeidung eines elektrischen Kontakts zwischen den Leiterschleifengruppen (11) und dem Statorkern (20) auf der Innenseite der geschlossenen Enden (13) der einseitig offenen Leiterschleifen (12) angebracht wird und/oder
wobei bei dem Einbringen des Statorkerns (20) ein Isolierstoff (52), vorzugsweise Isolierpapier, zwischen den Statorkern (20) und die offenen Leiterschleifen (12) eingebracht wird.

5. Verfahren nach einem der vorhergehenden Ansprüche, wobei nach dem Einbringen des Statorkerns (20) Zwischenräume zwischen der Basiswicklungsbaugruppe (10) und dem Statorkern (20) mit einem isolierenden Medium (53), vorzugsweise mit Epoxidharz, ausgegossen werden.

6. Verfahren nach einem der vorhergehenden Ansprüche, wobei vor dem Ausbilden des Wickelkopfes (30) ein bedruckbares Substrat (60) auf die Stirnseite der Statorbasisbaugruppe mit den offenen Enden (14) der einseitig offenen Leiterschleifen (12) aufgelegt wird, das leitende Strukturen (61) zum Verbinden der einseitig offenen Leiterschleifen (12) enthält.

7. Verfahren nach einem der vorhergehenden Ansprüche, wobei die Ausbildung von elektrischen Anschlüssen (32) für die Leiterschleifengruppen (11) mittels eines additiven Fertigungsverfahrens erfolgt.

8. Verfahren nach einem der vorhergehenden Ansprüche, wobei die Basiswicklungsbaugruppe mittels eines mechanischen Fertigungsschrittes hergestellt wird.

9. Verfahren nach einem der vorhergehenden Ansprüche, wobei die Basiswicklungsbaugruppe durch ein Biegeverfahren hergestellt wird.

10. Verfahren nach einem der vorhergehenden Ansprüche, wobei die Basiswicklungsbaugruppe durch ein Stanzbiegeverfahren hergestellt wird.

11. Verfahren nach einem der vorhergehenden Ansprüche, wobei der Wickelkopf nach dem Zusammenfügen von Basiswicklungsbaugruppe und einem Statorkern auf den offenen Enden der Leiterschleifen der Basiswicklungsbaugruppe ausgebildet wird.

12. Verfahren nach einem vorhergehenden Ansprüche, wobei die Leiterschleifen nicht vorab zu einer Basiswicklungsbaugruppe zusammengesetzt werden, sondern die Leiterschleifen direkt auf die Polkerne des Statorkerns aufgesteckt werden und die Basiswicklungsbaugruppe somit während des Aufsteckens der Leiterschleifen auf den Statorkern gebildet wird.

13. Verfahren nach einem vorhergehenden Ansprüche, wobei einige der einseitig offenen Leiterschleifen so ausgebildet sind, dass sie sich über mehrere benachbarte Leiterschleifengruppen erstrecken, um eine verteilte Wicklung herzustellen, bei der einige der einseitig offenen Leiterschleifen mehr als einen Pol einschließen.

14. Verfahren nach einem vorhergehenden Ansprüche, wobei zur additiven Herstellung ein schichtweises Aufbringen und örtliches Verfestigen von Aufbaumaterial erfolgt.

15. Stator für eine elektrische Maschine, hergestellt nach einem der vorhergehenden Ansprüche.
